(19) Europäisches Patentamt
European Patent Office
Office européen des brevets

(11) EP 0 519 237 B1

(12) **EUROPÄISCHE PATENTSCHRIFT**

(45) Veröffentlichungstag und Bekanntmachung des Hinweises auf die Patenterteilung:
**12.02.1997 Patentblatt 1997/07**

(51) Int. Cl.$^6$: **C08F 10/00**, C08F 4/622

(21) Anmeldenummer: **92108888.6**

(22) Anmeldetag: **27.05.1992**

(54) **Lösliche Katalysatorsysteme zur Herstellung von Polyalk-1-enen mit hohen Molmassen**
Soluble catalyst systems for preparing poly-1-alcenes with high molecular weight
Systèmes catalytiques solubles pour préparation de poly-1-alcènes de haut poids moléculaire

(84) Benannte Vertragsstaaten:
**BE DE ES FR GB IT NL**

(30) Priorität: **18.06.1991 DE 4120009**

(43) Veröffentlichungstag der Anmeldung:
**23.12.1992 Patentblatt 1992/52**

(60) Teilanmeldung: **95115772.6**

(73) Patentinhaber: **BASF Aktiengesellschaft**
**67063 Ludwigshafen (DE)**

(72) Erfinder:
- **Karl, Eberhard**
  **W-7080 Aalen (DE)**
- **Roell, Werner, Dr.**
  **W-7750 Konstanz (DE)**
- **Brintzinger, Hans, Prof.Dr.**
  **CH-8274 trögerwilen (CH)**
- **Rieger, Bernhard, Dr.**
  **W-7401 Nehren (DE)**
- **Stehling, Udo**
  **W-7750 Konstanz (DE)**

(56) Entgegenhaltungen:
**EP-A- 0 336 128** **EP-A- 0 347 128**
**EP-A- 0 485 823**

- **DIE MAKROMOLEKULARE CHEMIE:MAKROMOLECULAR SYMPOSIA Bd. 48/49, August 1991, Basel, CH, Seite 333-347, M Antberg, 'Stereospecific polymerizations with metallocene catalysts: products and technical aspects'**

EP 0 519 237 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Rank Xerox (UK) Business Services
2.13.13/3.4

## Beschreibung

Die vorliegende Erfindung betrifft Katalysatorsysteme zur Polymerisation von $C_2$- bis $C_{10}$-Alk-1-enen, enthaltend als aktive Bestandteile

a) einen Metallocenkomplex der allgemeinen Formel I

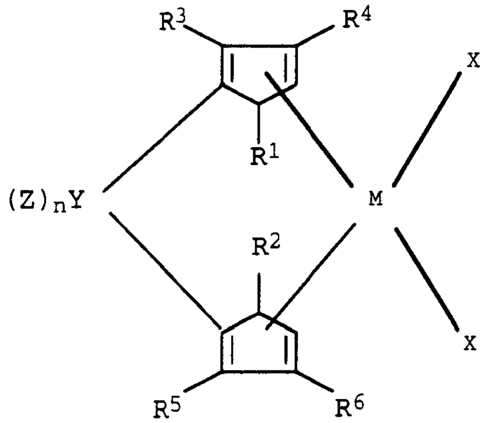

I

in der die Substituenten folgende Bedeutung haben:

| | |
|---|---|
| M | Titan, Zirkonium, Hafnium, Vanadium, Niob, Tantal |
| X | Halogen oder $C_1$- bis $C_8$-Alkyl |
| Y | Kohlenstoff, Phosphor, Schwefel, Silicium oder Germanium |
| Z | $C_1$- bis $C_8$-Alkyl, $C_3$- bis $C_{10}$-Cycloalkyl, $C_6$- bis $C_{10}$-Aryl |
| $R^1$, $R^2$ | $C_1$- bis $C_4$-Alkyl, wobei $R^1$ und $R^2$ gleich oder verschieden sind |
| $R^3$ bis $R^6$ | Wasserstoff, $C_1$- bis $C_8$-Alkyl, wobei $R^3$ bis $R^6$ gleich oder verschieden sind, oder wobei zwei benachbarte Reste $R^3$ und $R^4$ sowie $R^5$ und $R^6$ jeweils zusammen für 4 bis 15 C-Atome aufweisende Kohlenwasserstoffringsysteme stehen |
| und n | für 0,1 oder 2 steht, |

wobei folgende Verbindungen ausgeschlossen sind:

Dimethylsilyl(2-methylindenyl)$_2$zirkondichlorid,
Dimethylsilyl(2-methylindenyl)$_2$zirkondimethyl,
Phenyl(methyl)silyl(2-methylindenyl)$_2$zirkondichlorid,
Diphenylsilyl(2-methylindenyl)$_2$zirkondichlorid,
Dimethylsilyl(2-ethylindenyl)$_2$zirkondichlorid,
Isopropyliden(2-methylindenyl)$_2$zirkondichlorid,
Phenyl(methyl)silyl(2-methylindenyl)$_2$zirkondimethyl,
Dimethylsilyl(2-methyl-4,5,6,7-tetrahydro-1-indenyl)$_2$zirkondichlorid,
Dimethylsilyl(2-methyl-4,5,6,7-tetrahydro-1-indenyl)$_2$zirkondimethyl und
Dimethylsilyl(2,4-dimethylcyclopentadienyl)$_2$zirkondichlorid

b) sowie eine offenkettige oder cyclische Alumoxanverbindung der allgemeinen Formel II bzw. III

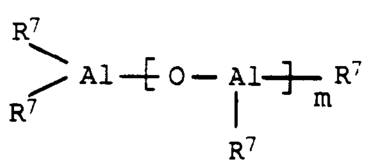 (II) 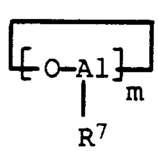 (III)

wobei $R^7$ eine $C_1$-$C_4$-Alkylgruppe bedeutet und m für eine Zahl von 5 bis 30 steht.

Außerdem betrifft die Erfindung ein Verfahren zur Herstellung von Polymerisaten des Propylens mit Hilfe dieser Katalysatorsysteme.

Für die Polymerisation von Alk-1-enen können neben den unlöslichen Ziegler-Natta-Katalysatoren auch lösliche Katalysatorsysteme verwendet werden. Bei letzteren handelt es sich um Komplexverbindungen von Metallen der IV. und V. Nebengruppe des Periodensystems mit organischen Liganden, die in Verbindung mit oligomeren Aluminiumverbindungen eingesetzt werden (EP-A 185 918, EP-A 283 739 und GB-A 2 207 136). Die bei diesen Katalysatorsystemen verwendeten Komplexverbindungen enthalten als organische Liganden meist Cyclopentadienylgruppen, die mit dem Übergangsmetall $\pi$-Bindungen eingehen. Häufig werden als Katalysatoren auch solche Übergangsmetallkomplexe verwendet, die neben organischen Liganden noch an das Metallatom gebundene Halogene aufweisen.

In der EP-A 347 128 wird ein Verfahren zur Herstellung von EPC-Elastomeren in Gegenwart von Metallocenen beschrieben.

In den EP-A 284 708 und 316 155 sowie der EP-A 355 447 werden lösliche Katalysatorsysteme zur Polymerisation von Alk-1-enen beschrieben, bei denen als Komplexverbindungen Bis(cyclopentadienyl)komplexe von Metallen der IV. Nebengruppe des Periodensystems verwendet werden, wobei die beiden Cyclopentadienylringe durch ein alkylsubstituiertes Silicium-, Zinn-, oder Germaniumatom oder durch Schwefelatome verbunden sind. Dabei können auch solche Übergangsmetallkomplexe eingesetzt werden, bei denen die Cyclopentadienylringe durch Alkylgruppen substituiert sind und die als weitere Liganden zwei an das Übergangsmetall gebundene Halogene enthalten. Als oligomere Aluminiumverbindungen werden dabei vorzugsweise lineare oder cyclische Alumoxanverbindungen der allgemeinen Formel II oder III verwendet.

Mit Hilfe derartiger Katalysatorsysteme sind Polymerisate des Propylens erhältlich, die sich unter anderem durch eine relativ enge Molmassenverteilung auszeichnen. Im Gegensatz zu Polypropylen, welches durch Verwendung von unlöslichen Ziegler-Natta-Katalysatoren hergestellt wird, liegen die Molmassen der auf diese Weise erhaltenen Polypropylene bei deutlich geringeren Werten, so daß diese für zahlreiche Anwendungsgebiete, bei denen Polymerisate mit Molmassen von mehr als 100000 eingesetzt werden, nicht verwendet werden können.

Den gleichen Nachteil weisen die in der EP-A 336 128 beschriebenen Polymere auf, die mit Hilfe von Katalysatorsystemen, bestehend aus einem Alumoxan und Metallocenen, die in 2-Stellung unsubstituiert sind, hergestellt werden.

Eine Möglichkeit, die Molmassen von Polyolefinen zu erhöhen, besteht darin, während der Polymerisation die Reaktionstemperatur zu senken. Auf diese Weise sind beispielsweise bei der EP-A 355 447 Propylenpolymerisate mit Molmassen von annähernd 50000 ($\overline{M}_w$) erhältlich. Bei dieser Maßnahme ist jedoch die Erhöhung der Molmassen mit einer deutlichen Verlangsamung der Polymerisationsgeschwindigkeit, also einer deutlichen Erhöhung der Reaktionsdauer verbunden, so daß die Senkung der Reaktionstemperatur die Wirtschaftlichkeit des Herstellungsverfahrens beeinträchtigt.

Der vorliegenden Erfindung lag daher die Aufgabe Zugrunde, diesem Nachteil abzuhelfen und ein verbessertes lösliches Katalysatorsystem zu entwickeln, mit dessen Hilfe Polyalk-1-ene mit hohen Molmassen auf möglichst wirtschaftliche Weise hergestellt werden können.

Demgemäß wurden die eingangs definierten löslichen Katalysatorsysteme gefunden.

Erfindungsgemäß werden dabei Metallocenkomplexe der allgemeinen Formel I verwendet, wobei als Zentralatome M Titan, Zirkonium, Hafnium, Vanadium, Niob oder Tantal eingesetzt werden. Das Zentralatom ist bei dem erfindungsgemäß einzusetzenden Metallkomplex der allgemeinen Formel I zum einen über $\pi$-Bindungen an substituierte Cyclopentadienylgruppen und zum anderen an weitere Substituenten X gebunden, die Fluor, Chlor, Brom oder Jod oder ein $C_1$- bis $C_8$-Alkyl sein können. Bevorzugt werden solche Metallocenkomplexe der allgemeinen Formel I verwendet, bei denen M für Zirkonium oder Hafnium und X für Chlor oder Brom steht.

Des weiteren enthält der erfindungsgemäß einzusetzende Metallkomplex der allgemeinen Formel I neben dem Zentralatom und dessen Substituenten sowie den substituierten Cyclopentadienylgruppen noch ein Brückenglied $(Z)_nY$, welches die beiden Cyclopentadienylgruppen miteinander verbindet. Dabei bedeutet Y Kohlenstoff, Phosphor, Schwefel, Silicium oder Germanium, Z ein $C_1$- bis $C_8$-Alkyl, $C_3$- bis $C_{10}$-Cycloalkyl oder $C_6$- bis $C_{10}$-Aryl und n die Zahlen 0, 1 oder 2.

Bei den bevorzugt eingesetzten Metallocenkomplexen der allgemeinen Formel I steht Y für Kohlenstoff, Schwefel oder Silicium, Z für ein $C_1$-bis $C_4$-Alkyl und n für die Zahl 2.

Ein weiterer wichtiger Bestandteil der erfindungsgemäß einzusetzenden Metallkomplexe der allgemeinen Formel I sind substituierte Cyclopentadienylgruppen. Diese enthalten jeweils Reste $R^1$ bzw. $R^2$, die gleich oder verschieden sind und für eine $C_1$- bis $C_4$-Alkylgruppe, insbesondere für eine Methyl-, Ethyl-, iso-Propyl- oder eine tert.-Butylgruppe stehen. Weiterhin weisen diese Cyclopentadienylgruppen die Substituenten $R^3$ bis $R^6$ auf, wobei $R^3$ bis $R^6$ die Bedeutung Wasserstoff oder $C_1$- bis $C_8$-Alkyl haben und gleich oder verschieden sind oder wobei zwei benachbarte Reste $R^3$ und $R^4$ sowie $R^5$ und $R^6$ jeweils zusammen für 4 bis 15 C-Atome aufweisende Kohlenwasserstoffringsysteme stehen. Vorzugsweise werden dabei solche Metallocenkomplexe der allgemeinen Formel I eingesetzt, deren Cyclopentadienylgruppen solche Substituenten $R^3$ bis $R^6$ aufweisen, bei denen $R^3$ und $R^5$ für $C_1$- bis $C_4$-Alkyl und $R^4$ und $R^6$ für

Wasserstoff steht oder wobei zwei benachbarte Reste $R^3$ und $R^4$ sowie $R^5$ und $R^6$ jeweils zusammen für 4 bis 12 C-Atome aufweisende Kohlenwasserstoffringsysteme, beispielsweise für ein Indenylsystem, stehen. Bei der Anzahl der C-Atome der Kohlenwasserstoffringsysteme werden dabei die beiden C-Atome des Cyclopentadienylsystems, die als Verknüpfungsstellen mit den Substituenten $R_3$ bis $R_6$ dienen, mitgezählt, wodurch sich beispielsweise für den Fall, daß $R^3$ und $R^4$ sowie $R^5$ und $R^6$ jeweils für einen Cyclohexylrest stehen, insgesamt zwei Kohlenwasserstoffringsysteme mit jeweils 6 C-Atomen ergeben.

Beispiele für besonders bevorzugte Metallocenkomplexe sind u.a.

Diethylsilandiylbis(-2-methylindenyl)-zirkoniumdichlorid,
Dimethylsilandiylbis(-2-isopropylindenyl)-zirkoniumdichlorid,
Dimethylsilandiylbis(-2-tert.butylindenyl)-zirkoniumdichlorid,
Dimethylsilandiylbis(-2-methylindenyl)-zirkoniumdibromid,
Dimethylsulfidbis(-2-methylindenyl)-zirkoniumdichlorid,
Dimethylsilandiylbis(-2-methyl-5-methylcyclopentadienyl)-zirkoniumdichlorid,
Dimethylsilandiylbis(-2-methyl-5-ethylcyclopentadienyl)-zirkoniumdichlorid,
Dimethylsilandiylbis(-2-ethyl-5-isopropylcyclopentadienyl)-zirkoniumdichlorid,
Dimethylsilandiylbis(-2-methylbenzindenyl)-zirkoniumdichlorid und
Dimethylsilandiylbis(-2-methylindenyl)-hafniumdichlorid.

Die Synthese derartiger Komplexe kann nach an sich bekannten Methoden erfolgen, wobei die Umsetzung der entsprechend substituierten Cycloalkenylanionen mit Halogeniden von Titan, Zirkonium, Hafnium, Vanadium, Niob oder Tantal bevorzugt ist. Beispiele für entsprechende Herstellungsverfahren sind u.a. im Journal of Organometallic Chemistry, 369 (1989), 359-370 beschrieben.

Neben dem Metallocenkomplex enthält das erfindungsgemäße Katalysatorsystem noch lineare oder cyclische Alumoxanverbindungen der allgemeinen Formel II oder III

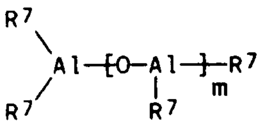 (II)

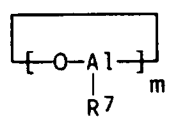 (III)

wobei $R^7$ bevorzugt für Methyl- oder Ethylgruppen und m bevorzugt für eine Zahl von 10 bis 25 steht.

Die Herstellung dieser Alumoxanverbindungen erfolgt üblicherweise durch Umsetzung einer Lösung von Trialkylaluminium mit Wasser und ist u.a. in der EP-A 284 708 und der US-A 4,794,096 beschrieben.

In der Regel liegen die dabei erhaltenen Alumoxane als Gemische unterschiedlich langer, sowohl linearer als auch cyclischer Kettenmoleküle vor, so daß m als Mittelwert anzusehen ist. Die Alumoxanverbindung kann außerdem noch Trialkylaluminiumverbindungen enthalten, deren Alkylgruppen jeweils 1 bis 8 C-Atome aufweisen, beispielsweise Trimethyl-, Triethyl- oder Methyldiethylaluminium.

Bei der Polymerisation von Alk-1-enen mit Hilfe des erfindunggemäßen Katalysatorsystems ist es vorteilhaft, den Metallocenkomplex a) und die Alumoxanverbindung b) in solchen Mengen zu verwenden, daß das atomare Verhältnis zwischen Aluminium aus dem Alumoxan b) und dem Übergangsmetall aus dem Metallocenkomplex a) im Bereich von $10:1$ bis $10^6:1$, insbesondere im Bereich von $10:1$ bis $10^4:1$ liegt. Dabei können die beiden Katalysatorbestandteile in beliebiger Reihenfolge einzeln oder als Gemisch in den Polymerisationsreaktor eingebracht werden. Ein besonders reaktives lösliches Katalysatorsystem ist dann erhältlich, wenn man 5 bis 60 Minuten, insbesondere 10 bis 40 Minuten vor der eigentlichen Polymerisation den Metallocenkomplex a) und die Alumoxanverbindung b) miteinander vermischt. Der auf diese Weise aktivierte Katalysator kann anschließend sofort verwendet werden.

Mit Hilfe dieser löslichen Katalysatorsysteme lassen sich Polymerisate von Alk-1-enen herstellen. Darunter werden Homo- und Copolymerisate von $C_2$- bis $C_{10}$-Alk-1-enen verstanden, wobei als Monomere vorzugsweise Ethylen, Propylen, But-1-en, Pent-1-en und Hex-1-en verwendet werden. Die erfindungsgemäßen Katalysatorsysteme eignen sich insbesondere zur Herstellung von Polypropylen und von Copolymerisaten des Propylens mit untergeordneten Anteilen anderer $C_2$- bis $C_{10}$-Alk-1-ene, insbesondere von Ethylen und But-1-en.

Die Herstellung dieser Polymerisate kann in den üblichen, für die Polymerisation von Alk-1-enen verwendeten Reaktoren entweder absatzweise oder bevorzugt kontinuierlich durchgeführt werden. Geeignete Reaktoren sind u.a. kontinuierlich betriebene Rührkessel, wobei man gegebenenfalls auch eine Reihe von mehreren hintereinander geschalteten Rührkesseln verwenden kann.

Die Polymerisation wird bei Drücken von 0,1 bis 3000 bar und Temperaturen von -20 bis 300°C durchgeführt. Bevorzugt sind dabei Drücke von 0,5 bis 2500 bar und Temperaturen von +10 bis +150°C. Die Polymerisationsdauer liegt üblicherweise im Bereich von 0,5 bis 10 Stunden.

Polymerisationsreaktionen mit Hilfe der erfindungsgemäßen Katalysatorsysteme lassen sich in der Gasphase, in flüssigen Monomeren und in inerten Lösungsmitteln durchführen. Bevorzugt wird dabei die Polymerisation in Lösungsmitteln, insbesondere in flüssigen Kohlenwasserstoffen wie Benzol oder Toluol angewandt. In diesem Fall ist es vorteilhaft, wenn man pro Liter des Lösungsmittels $10^{-4}$ bis $10^{-1}$ mol Aluminium als Alumoxan verwendet.

Die mittlere Molmasse der gebildeten Polymerisate kann mit den in der Polymerisationstechnik üblichen Methoden gesteuert werden, beispielsweise durch Zufuhr von Reglern wie Wasserstoff, oder durch Veränderung der Reaktionstemperaturen.

Die mit Hilfe der erfindungsgemäßen Katalysatorsysteme hergestellten Polymerisate zeichnen sich durch eine hohe Molmasse und eine enge Molmassenverteilung aus. Sie können noch bei relativ hohen Temperaturen hergestellt werden, wodurch sich die Polymerisationsdauer begrenzen läßt. Aufgrund dieser Eigenschaften eignen sich die aus den erfindungsgemäßen Katalysatorsystemen erhältlichen Polymerisate insbesondere zur Herstellung von Folien und Formkörpern.

Beispiele Herstellung von Polypropylen

Vergleichsbeispiel V1

In einem Rührautoklaven mit einem Nutzvolumen von 1 l wurden 350 ml getrocknetes Toluol vorgelegt und anschließend mit einer Lösung von 0,45 g Methylalumoxan (durchschnittliche Kettenlänge m = 20) in 30 ml Toluol versetzt. Dabei wurden pro Liter des Lösungsmittels $7{,}6 \cdot 10^{-3}$ mol Aluminium verwendet. Anschließend wurde eine Lösung von 15 mg Dimethylsilandiylbis(-2-methylindenyl)zirkoniumdichlorid (entsprechend $31{,}2 \cdot 10^{-6}$ mol) in 15 ml Toluol hinzugefügt, so daß das atomare Verhältnis zwischen Aluminium und Zirkonium 244:1 betrug. Diese Mischung wurde zunächst 30 Minuten lang bei 50°C gerührt und anschließend wurde Propylen bei einem Druck von 2 bar eingepreßt und 4 Stunden und 40 Minuten lang polymerisiert. Die Polymerisation erfolgte dabei bei einer Temperatur von $50^0$C und einem Druck von 2 bar. Danach entfernte man noch unverbrauchtes Propylen und fügte der Reaktionslösung ein Gemisch aus 1 l Methanol und 10 ml konzentrierter Salzsäure hinzu. Das ausgefallene Polymerisat wurde abfiltriert, mit Methanol gewaschen und im Vakuum getrocknet.

Dabei erhielt man 45 g Polypropylen mit einem Gewichtsmittel ($\overline{M}_w$) von 114200, einem Zahlenmittel ($\overline{M}_n$) von 41500 und einer Molmassenverteilung ($\overline{M}_w/\overline{M}_n$) von 2,75.

Beispiel 1

Es wurde analog zum Vergleichsbeispiel V1 gearbeitet, wobei ebenfalls 350 ml getrocknetes Toluol vorgelegt und anschließend mit einer Lösung von 0,45 Methylalumoxan (m=20) in 30 ml Toluol versetzt wurden. Anschließend wurde eine Suspension von 0,5 mg Dimethylsilandiyl-bis-[3,3'-(2-methylbenzindenyl)]-zirkoniumdichlorid in 20 ml Toluol hinzugefügt, so daß das atomare Verhältnis zwischen Aluminium und Zirkonium 8950 : 1 betrug. Dann wurde wie unter V1 beschrieben weitergearbeitet.

Man erhielt 51,4 g Polypropylen mit einem Gewichtsmittelwert ($\overline{M}_w$) von 142 896, einem Zahlenmittelwert ($\overline{M}_n$) von 91917 und einer Molmassenverteilung von 1,55.

Pentadengehalt, gemessen mittels $^{13}$C-NMR: Anteil mmmm = 93,5 %.

**Patentansprüche**

1. Katalysatorsysteme zur Polymerisation von $C_2$- bis $C_{10}$-Alk-1-enen, enthaltend als aktive Bestandteile

   a) einen Metallocenkomplex der allgemeinen Formel I

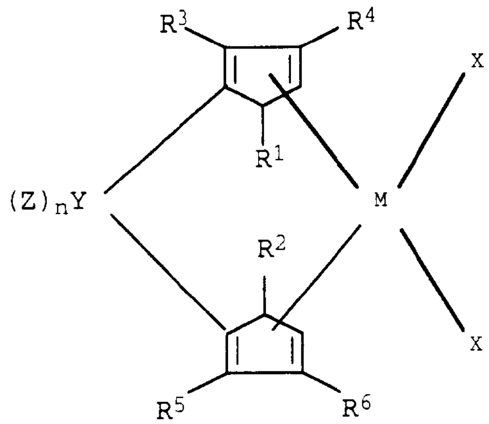

I

in der die Substituenten folgende Bedeutung haben:

| | |
|---|---|
| M | Titan, Zirkonium, Hafnium, Vanadium, Niob, Tantal |
| X | Halogen oder $C_1$- bis $C_8$-Alkyl |
| Y | Kohlenstoff, Phosphor, Schwefel, Silicium oder Germanium |
| Z | $C_1$- bis $C_8$-Alkyl, $C_3$- bis $C_{10}$-Cycloalkyl, $c_6$-bis $C_{10}$-Aryl |
| $R^1$, $R^2$ | $C_1$- bis $C_4$-Alkyl, wobei $R^1$ und $R^2$ gleich oder verschieden sind |
| $R^3$ bis $R^6$ | Wasserstoff, $C_1$- bis $C_8$-Alkyl, wobei $R^3$ bis $R^6$ gleich oder verschieden sind, oder wobei zwei benachbarte Reste $R^3$ und $R^4$ sowie $R^5$ und $R^6$ jeweils zusammen für 4 bis 15 C-Atome aufweisende Kohlenwasserstoffringsysteme stehen |
| und n | für 0,1 oder 2 steht, |

wobei folgende Verbindungen ausgeschlossen sind:

Dimethylsilyl(2-methylindenyl)$_2$zirkondichlorid,
Dimethylsilyl(2-methylindenyl)$_2$zirkondimethyl,
Phenyl(methyl)silyl(2-methylindenyl)$_2$zirkondichlorid,
Diphenylsilyl(2-methylindenyl)$_2$zirkondichlorid,
Dimethylsilyl(2-ethylindenyl)$_2$zirkondichlorid,
Isopropyliden(2-methylindenyl)$_2$zirkondichlorid,
Phenyl(methyl)silyl(2-methylindenyl)$_2$zirkondimethyl,
Dimethylsilyl(2-methyl-4,5,6,7-tetrahydro-1-indenyl)$_2$zirkondichlorid,
Dimethylsilyl(2-methyl-4,5,6,7-tetrahydro-1-indenyl)$_2$zirkondimethyl und
Dimethylsilyl(2,4-dimethylcyclopentadienyl)$_2$zirkondichlorid

b) sowie eine offenkettige oder cyclische Alumoxanverbindung der allgemeinen Formel II bzw. III

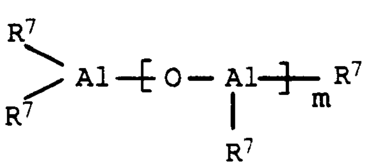

(II)

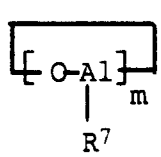

(III)

wobei $R^7$ eine $C_1$-$C_4$-Alkylgruppe bedeutet und m für eine Zahl von 5 bis 30 steht.

**2.** Katalysatorsysteme nach Anspruch 1, in denen M für Hafnium oder Zirkonium steht.

**3.** Katalysatorsysteme nach den Ansprüchen 1 oder 2, in denen X für Chlor oder Brom steht.

**4.** Katalysatorsysteme nach den Ansprüchen 1 bis 3, in denen Y für Kohlenstoff, Schwefel oder Silicum steht.

5. Katalysatorsysteme nach den Ansprüchen 1 bis 4, in denen $R^1$ und $R^2$ gleich oder verschieden sind und für eine Methyl-, Ethyl-, iso-Propyl- oder tert.-Butylgruppe stehen.

6. Katalysatorsysteme nach den Ansprüchen 1 bis 5, in denen $R^3$ bis $R^6$ die Bedeutung

   $R^3$ und $R^5$ $C_1$ bis $C_4$-Alkyl
   $R^4$ und $R^6$ Wasserstoff

   haben oder zwei benachbarte Reste $R^3$ und $R^4$ sowie $R^5$ und $R^6$ jeweils zusammen für 4 bis 12 C-Atome aufweisende Kohlenwasserstoffringsysteme stehen.

7. Katalysatorsysteme nach den Ansprüchen 1 bis 6, in denen der Metallocenkomplex a) und die Alumoxanverbindung b) in solchen Mengen verwendet werden, daß das atomare Verhältnis zwischen Aluminium aus dem Alumoxan b) und dem Übergangsmetall aus dem Metallocenkomplex a) im Bereich von 10:1 bis $10^6$:1 liegt.

8. Katalysatorsysteme nach den Ansprüchen 1 bis 7, erhältlich durch 5 bis 60 minütiges Vermischen des Metallocenkomplexes a) und der Alumoxanverbindung b) vor der Polymerisation.

9. Verfahren zur Herstellung von Polymerisaten von $C_2$- bis $C_{10}$-Alk-1-enen bei Drücken von 0,1 bis 3000 bar und Temperaturen von -20 bis 300°C mit Hilfe eines Katalysatorsystems bestehend aus Bis-cyclopentadienylkomplexen von Übergangsmetallen und Alumoxanverbindungen, dadurch gekennzeichnet, daß man hierzu Katalysatorsysteme gemäß den Ansprüchen 1 bis 8 verwendet.

## Claims

1. A catalyst system for the polymerization of $C_2$-$C_{10}$-1-alkenes, containing as active components

   a) a metallocene complex of the formula I

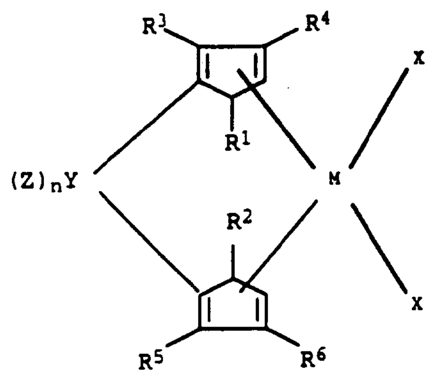

I

   where

| | |
|---|---|
| M | is titanium, zirconium, hafnium, vanadium, niobium, tantalum, |
| X | is halogen or $C_1$-$C_8$-alkyl, |
| Y | is carbon, phosphorus, sulfur, silicon or germanium, |
| Z | is $C_1$-$C_8$-alkyl, $C_3$-$C_{10}$-cycloalkyl, $C_6$-$C_{10}$-aryl, |
| $R^1$, $R^2$ | are identical or different and are $C_1$-$C_4$-alkyl, |
| $R^3$ to $R^6$ | are hydrogen, $C_1$-$C_8$-alkyl, and $R^3$ to $R^6$ are identical or different, or two adjacent radicals $R^3$ and $R^4$, and $R^5$ and $R^6$, each together form a hydrocarbon ring system with 4 to 15 carbon atoms, |
| and n | is 0, 1 or 2, |

   the following compounds being excepted:

   dimethylsilyl(2-methylindenyl)$_2$zirconium dichloride,
   dimethylsilyl(2-methylindenyl)$_2$zirconium dimethyl,

phenyl(methyl)silyl(2-methylindenyl)$_2$zirconium dichloride,
diphenylsilyl(2-methylindenyl)$_2$zirconium dichloride,
dimethylsilyl(2-ethylindenyl)$_2$zirconium dichloride,
isopropyliden(2-methylindenyl)$_2$zirconium dichloride,
phenyl(methyl)silyl(2-methylindenyl)$_2$zirconium dimethyl,
dimethylsilyl(2-methyl-4,5,6,7-tetrahydro-1-indenyl)$_2$zirconium dichloride,
dimethylsilyl(2-methyl-4,5,6,7-tetrahydro-1-indenyl)$_2$zirconium dimethyl and
dimethylsilyl(2,4-dimethylcyclopentadienyl)$_2$-zirconium dichloride,

b) and an open-chain or cyclic alumoxane compound of the formula II or III

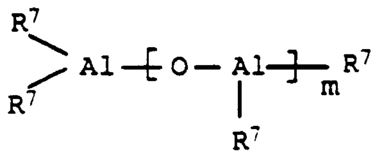 (II) 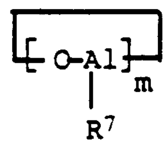 (III)

where $R^7$ is $C_1$-$C_4$-alkyl and m is from 5 to 30.

**2.** A catalyst system as claimed in claim 1, where M is hafnium or zirconium.

**3.** A catalyst system as claimed in claims 1 or 2, where X is chlorine or bromine.

**4.** A catalyst system as claimed in claims 1 to 3, where Y is carbon, sulfur or silicon.

**5.** A catalyst system as claimed in claims 1 to 4, where $R^1$ and $R^2$ are identical or different and are methyl, ethyl, isopropyl or tert-butyl.

**6.** A catalyst system as claimed in claims 1 to 5, where

$R^3$ and $R^5$ are $C_1$-$C_4$-alkyl
$R^4$ and $R^6$ are hydrogen
or two adjacent radicals $R^3$ and $R^4$, and $R^5$ and $R^6$, each together form a hydrocarbon ring system with 4 to 12 carbon atoms.

**7.** A catalyst system as claimed in claims 1 to 6, in which the metallocene complex a) and the alumoxane compound b) are used in amounts such that the atomic ratio between aluminum from the alumoxane b) and the transition metal from the metallocene complex a) is in the range from 10:1 to $10^6$:1.

**8.** A catalyst system as claimed in claims 1 to 7, obtainable by mixing the metallocene complex a) and the alumoxane compound b) for from 5 to 60 minutes before the polymerization.

**9.** A process for the preparation of polymers of $C_2$-$C_{10}$-1-alkenes under from 0.1 to 3000 bar and at from -20 to 300°C with the aid of a catalyst system composed of biscyclopentadienyl complexes of transition metals and alumoxane compounds, which comprises using for this purpose a catalyst system as claimed in claims 1 to 8.

### Revendications

**1.** Systèmes catalytiques pour la polymérisation de 1-alcènes en $C_2$ à $C_{10}$, contenant en tant que constituants actifs

a) un complexe métallocène répondant à la formule générale I

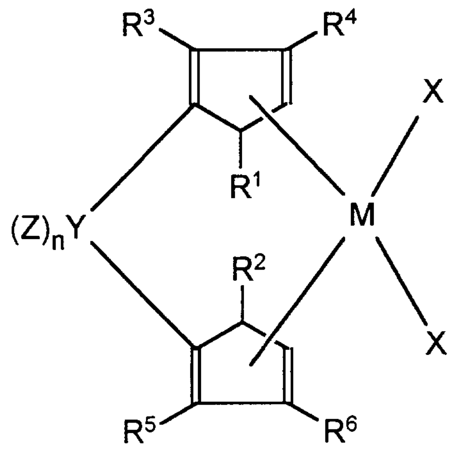

I

dans laquelle les substituants présentent la signification suivante :

| | |
|---|---|
| M | représente du titane, du zirconium, de l'hafnium, du vanadium, du niobium ou du tantale, |
| X | représente un halogène ou un groupe alkyle en $C_1$ à $C_8$ |
| Y | représente du carbone, du phosphore, du soufre, du silicium ou du germanium, |
| Z | représente un groupe alkyle en $C_1$ à $C_8$, un groupe cycloalkyle en $C_3$ à $C_{10}$ ou un groupe aryle en $C_6$ à $C_{10}$ |
| $R^1$, $R^2$ | représentent un groupe alkyle en $C_1$ à $C_4$, $R^1$ et $R^2$ étant identiques ou différents |
| $R^3$ à $R^6$ | représentent un atome d'hydrogène, un groupe alkyle en $C_1$ à $C_8$, $R^3$ à $R^6$ étant identiques ou différents, ou deux résidus adjacents $R^3$ et $R^4$, de même que $R^5$ et $R^6$, représentant respectivement ensemble des systèmes hydrocarbonés cycliques présentant 4 à 15 atomes de carbone |
| et n | vaut 0, 1 ou 2, |

les composés suivants étant exclus :

le dichlorure de diméthylsilyl(2-méthylindényl)$_2$zirconium,
le diméthylsilyl(2-méthylindényl)$_2$zirconium diméthylique,
le dichlorure de phényl(méthyl)silyl(2-méthylindényl)$_2$zirconium,
le dichlorure de diphénylsilyl(2-méthylindényl)$_2$zirconium,
le dichlorure de diméthylsilyl(2-éthylindényl)$_2$zirconium,
le dichlorure d'isopropylidène(2-méthylindényl)$_2$zirconium,
le phényl(méthyl)silyl(2-méthylindényl)$_2$zirconium diméthylique,
le dichlorure de diméthylsilyl(2-méthyl-4,5,6,7-tétrahydro-1-indényl)$_2$zirconium,
le diméthylsilyl(2-méthyl-4,5,6,7-tétrahydro-1 -indényl)$_2$zirconium diméthylique et
le dichlorure de diméthylsilyl(2,4-diméthylcyclopentadiényl)$_2$zirconium

b) de même qu'un composé alumoxane à chaîne ouverte ou cyclique répondant à la formule générale II ou III

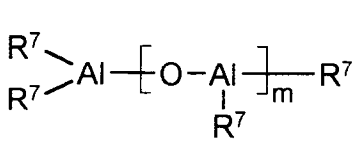

(II)

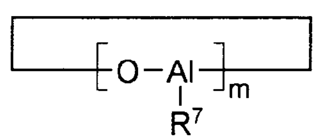

(III)

où $R^7$ représente un groupe alkyle en $C_1$ à $C_4$ et m représente un nombre de 5 à 30.

**2.** Systèmes catalytiques selon la revendication 1, dans lesquels M représente de l'hafnium ou du zirconium.

**3.** Systèmes catalytiques selon les revendications 1 ou 2, dans lesquels X représente du chlore ou du brome.

**4.** Systèmes catalytiques selon les revendications 1 à 3, dans lesquels Y représente du carbone, du soufre ou du silicium.

5. Systèmes catalytiques selon les revendications 1 à 4, dans lesquels $R^1$ et $R^2$ sont identiques ou différents et représentent un groupe méthyle, un groupe éthyle, un groupe isopropyle ou un groupe tert.-butyle.

6. Systèmes catalytiques selon les revendications 1 à 5, dans lesquels $R^3$ à $R^6$ représentent

   $R^3$ et $R^5$: un groupe alkyle en $C_1$ à $C_4$
   $R^4$ et $R^6$ : un atome d'hydrogène
   ou deux résidus adjacents $R^3$ et $R^4$, de même que $R^5$ et $R^6$, représentent respectivement ensemble des systèmes hydrocarbonés cycliques présentant 4 à 12 atomes de carbone.

7. Systèmes catalytiques selon les revendications 1 à 6, dans lesquels le complexe métallocène a) et le composé alumoxane b) sont utilisés en quantités telles, que le rapport atomique entre l'aluminium de l'alumoxane b) et le métal de transition du complexe métallocène a) se situe dans la gamme de 10:1 à $10^6$: 1.

8. Systèmes catalytiques selon les revendications 1 à 7, pouvant être obtenus par mélange pendant 5 à 60 minutes du complexe métallocène a) et du composé alumoxane b) avant la polymérisation.

9. Procédé de préparation de polymères de 1-alcènes en $C_2$ à $C_{10}$ à des pressions de 0,1 à 3.000 bar et à des températures de - 20 à 300 °C à l'aide d'un système catalytique constitué de complexes de bis-cyclopentadiényle de métaux de transition et de composés alumoxanes, caractérisé en ce qu'on utilise à cet effet des systèmes catalytiques selon les revendications 1 à 8.